Europäisches Patentamt

European Patent Office

Office européen des brevets

(11) Numéro de publication : **0 157 667**
**B1**

(12) FASCICULE DE BREVET EUROPÉEN

(45) Date de publication du fascicule du brevet :
27.05.87

(21) Numéro de dépôt : 85400396.9

(22) Date de dépôt : 01.03.85

(51) Int. Cl.⁴ : **B 60 D   1/02**, B 60 D   1/00

(54) Support de chape d'attelage de tracteur.

(30) Priorité : 02.03.84 FR 8403300

(43) Date de publication de la demande :
09.10.85 Bulletin 85/41

(45) Mention de la délivrance du brevet :
27.05.87 Bulletin 87/22

(84) Etats contractants désignés :
AT BE DE FR IT NL

(56) Documents cités :
DE-A- 2 304 475
DE-A- 2 311 586
DE-B- 1 555 199
DE-C-   928 445
FR-A-   928 592
FR-A- 2 446 732
US-A- 2 591 624
US-A- 2 993 710
US-A- 3 869 001

(73) Titulaire : **ATTELAGES LEMOINE- LA MECANO-SOU-
DURE REMOISE**
**1 rue du Commandant Barbier Zone Industrielle
Ouest
F-51057 Reims Cedex (FR)**

(72) Inventeur : **Mijot, Guy**
**3, rue des 16éme et 22ème dragons Escalier G
F-51100 Reims (FR)**
Inventeur : **Dienne, Didier**
**30, rue Jean-François Millet
F-02190 Guignicourt (FR)**
Inventeur : **Morel, Roland**
**19, rue garenne
Muizon F-51140 Jonchery sur vesle (FR)**

(74) Mandataire : **Gérardin, Robert Jean René
Cabinet Robert Gérardin 3A, avenue Georges Clémenceau Boîte Postale 2 719
F-51055 Reims Cédex (FR)**

## Description

L'invention concerne un support de chape moulé permettant de fixer une chape d'attelage sur l'arrière d'un tracteur, comportant deux branches nervurées reliables, par l'intermédiaire d'orifices évasés et de broches, à des ferrures fixées au châssis du tracteur.

Sur les tracteurs agricoles, les chapes d'attelage peuvent être permutées par l'intermédiaire des broches amovibles assurant la liaison du support de chape aux ferrures du châssis. Les chapes d'attelage retransmettent au châssis, par l'intermédiaire du support de chape et des broches de liaison, les efforts qui leur sont appliqués par le matériel remorqué.

Les supports de chape connus, sont constitués d'un fer plat dont les extrémités sont pliées à 90°, pour former deux branches parallèles. La rigidité de ces supports est renforcée par l'intermédiaire de nervures rapportées par soudure. Les orifices cylindriques, percés à l'extrémité des branches, permettent le passage des broches amovibles de liaison avec un certain jeu facilitant les démontages et les remontages manuels de l'attelage. Les efforts appliqués aux chapes d'attelage, qui deviennent de plus en plus importants, entraînent souvent des déformations permanentes des supports et des broches de liaison. Les broches de liaison se déforment librement, dans la limite qui leur est accordée par le jeu existant par rapport aux orifices de passage des orifices cylindriques percés aux extrémités des branches ; ce qui se traduit, lorsque cette limite est atteinte, par des efforts tranchants très importants exercés sur les broches au niveau de la face interne des branches, qui s'accompagne d'une flexion des branches vers l'intérieur, qui provoque généralement une déformation permanente de celles-ci ainsi que des extrémités des broches, ce qui rend parfois le démontage manuel du support de chape impossible. Pour pallier cette difficulté les constructeurs d'attelages n'avaient, jusqu'alors, d'autre ressource que celle d'augmenter l'épaisseur des branches des supports pour accroître leur résistance à la flexion, ce qui avait pour inconvénient d'augmenter le moment de l'effort tranchant, et d'augmenter le diamètre des broches pour accroître leur rigidité et leur résistance aux efforts tranchants. Il résultait de cette situation une augmentation excessive du coût des attelages et un alourdissement de ceux-ci.

On connaît déjà un support de chape moulé, permettant de fixer un attelage sur l'arrière d'un véhicule tracteur, correspondant au préambule de la revendication 1 (brevet des Etats Unis d'Amérique US-A-2 993 710). Ses branches comportent, vers l'intérieur et vers l'extérieur, une nervure de renfort, de largeur et d'épaisseur régulières, qui donne à celles-ci une section cruciforme, destinée à accroître leur moment d'inertie transversal et, par conséquent, leur résistance à la flexion. Dans un tel mode de construction l'extrémité des branches, non renforcée par des nervures, présente une certaine susceptibilité à la déformation permanente, par suite du franchissement de la limite élastique lors de l'application d'efforts de traction importants sur l'attelage. Il résultait de cette situation des difficultés de désolidarisation de l'attelage de son support.

On connaît aussi un mode de réalisation des orifices de passage d'un axe, éliminant les contraintes sur celui-ci lors de sa flexion, correspondant aux orifices évasés dont il est question au brevet des Etats Unis d'Amérique US-A-3 869 001. Les paliers pivots ont une forme adaptée aux différentes charges. Les points de contact entre les paliers et les pivots peuvent se déplacer selon la position angulaire des paliers. Cependant la forme des paliers est, de ce fait, assez complexe et, par conséquent, difficile et coûteuse à réaliser.

La présente invention a pour but de remédier à cet inconvénient. Cette invention, telle qu'elle est caractérisée dans les revendications, résout le problème consistant à créer un support de chape d'attelage avec lequel le moment des efforts tranchants sur les broches est réduit et la déformation des branches reste élastique, même pour des sollicitations très importantes de la chape d'attelage.

Les avantages obtenus, grâce à cette invention, consiste essentiellement en ce que les broches de liaison ne subissent aucun marquage, dûs aux efforts tranchants, ni aucune déformation permanente s'opposant à leur extraction. Les branches de support, lorsqu'elles se déforment sous l'effet d'importantes sollicitations, reviennent à leur position initiale lorsque ces sollicitations cessent.

L'invention est exposée ci-après plus en détail à l'aide de dessins représentant seulement un mode d'exécution.

La figure 1 représente, en perspective, un support de chape de type connu, fixé aux ferrures du châssis par deux broches.

La figure 2 représente, en perspective, un support de chape de type connu, vu du côté opposé à la chape.

La figure 3 représente, en perspective, un support de chape moulé selon l'invention, fixé aux ferrures du châssis par deux broches.

La figure 4 représente, en perspective, un support de chape moulé, selon l'invention, vu du côté opposé à la chape.

La figure 5 représente une vue de dessus, en coupe, selon l'une des broches de liaison, d'un support de chape de type connu, fixé aux ferrures du châssis du tracteur.

La figure 6 représente une vue de dessus, en coupe, selon l'une des broches de liaison, d'un support de chape de type connu, fixé aux ferrures du châssis du tracteur, soumis à un effort de traction F.

La figure 7 représente une vue de dessus, en coupe, selon l'une des broches de liaison, d'un support de chape moulé, selon l'invention, fixé aux ferrures du châssis du tracteur.

La figure 8 représente une vue en coupe longitudinale partielle, selon l'axe d'un orifice de passage de broche, de l'une des branches d'un support moulé, selon l'invention.

La figure 9 représente une vue de dessus, en coupe longitudinale, selon l'une des broches de liaison, d'un support de chape selon l'invention, fixé aux ferrures du châssis du tracteur, et non sollicité.

La figure 10 représente une vue de dessus, en coupe longitudinale, selon l'une des broches de liaison, d'un support de chape selon l'invention, fixé aux ferrures du châssis du tracteur, soumis à une importante force de traction.

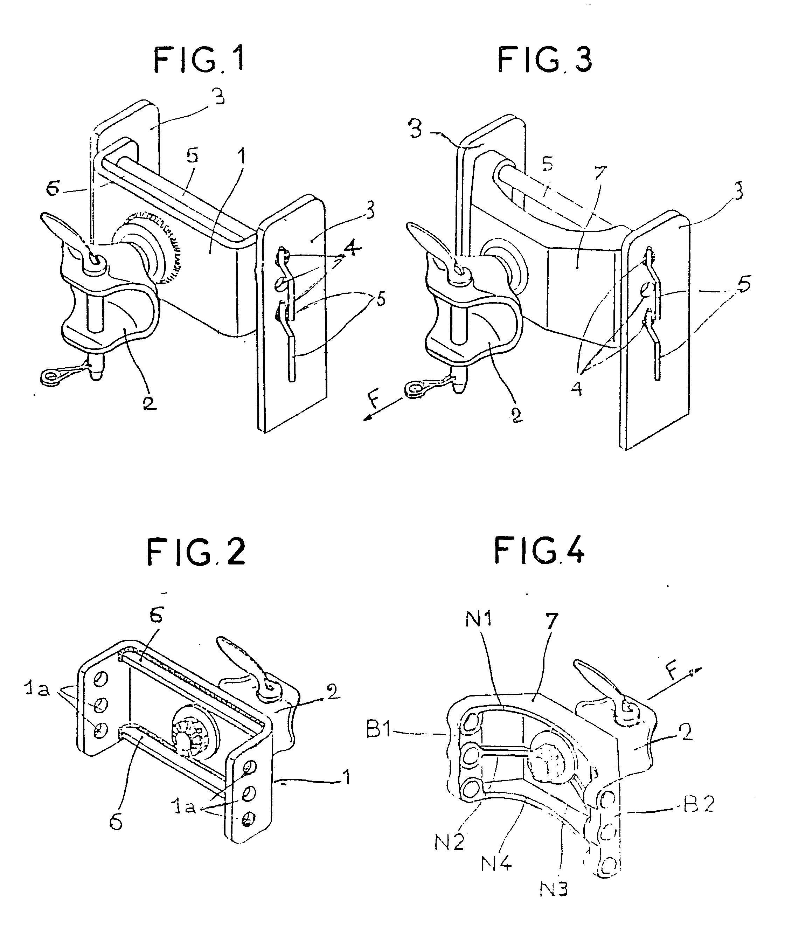

Les dessins représentent, sur les figures 1, 2, 5 et 6, un support de chape de type connu, comprenant essentiellement un support 1, renforcé par des nervures 6, supportant une chape 2, relié à des ferrures 3, solidaires du châssis du tracteur, par l'intermédiaire de broches de liaison 5 et d'orifices 1a et 4 percés respectivement à l'extrémité des branches du support de chape 1 et dans les ferrures 3 ; sur les figures 3, 4, 7, 8, 9 et 10 un support de chape selon l'invention comprenant essentiellement une chape moulée 7, renforcée par des nervures N, supportant une chape 2, reliée à des ferrures 3, solidaires du châssis du tracteur, par l'intermédiaire de branches B percées d'orifices C.

Conformément à la présente invention, le support de chape 7 est, comme le montre les figures 3 et 4, une pièce moulée épousant la forme d'un U comportant des nervures $N_1$, $N_2$, $N_3$ et $N_4$ dont la forme est définie de façon à obtenir la progressivité des contraintes au resserrage des branches $B_1$ et $B_2$ sous un effort de traction important exercé dans la direction de la flèche F de sorte, qu'en utilisant un matériau moulé choisi pour ses bonnes caractéristiques élastiques, les branches $B_1$ et $B_2$ du support se déforment élastiquement en se resserrant et reviennent à leur position initiale dès que l'effort F cesse.

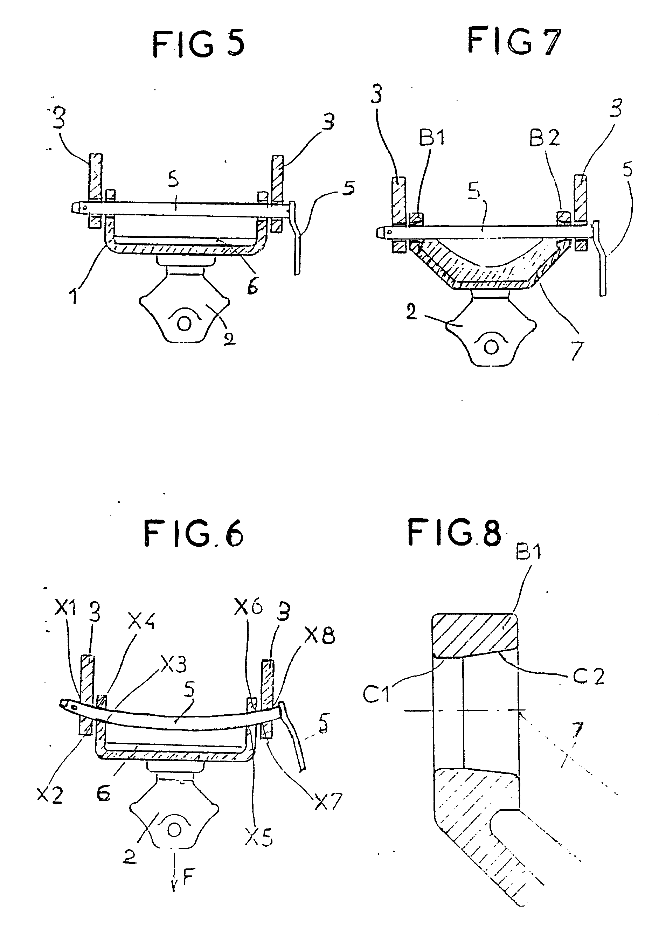

Sur le support de chape de type connu, les orifices de passage des broches 5 sont cylindriques, comme le montre la figure 5, ce qui présente l'inconvénient, lorsqu'on exerce une force F sur la chape, comme le montre la figure 6, de permettre un libre débattement transversal de l'extrémité des broches 5, dans la limite des jeux, puis de faire apparaître des contraintes ponctuelles aux endroits $X_1$, $X_2$, $X_3$, $X_4$, $X_5$, $X_6$, $X_7$ et $X_8$, qui se traduisent par des efforts tranchants, dont le moment correspond à l'épaisseur des branches, et par une déformation importante des broches 5 en flexion.

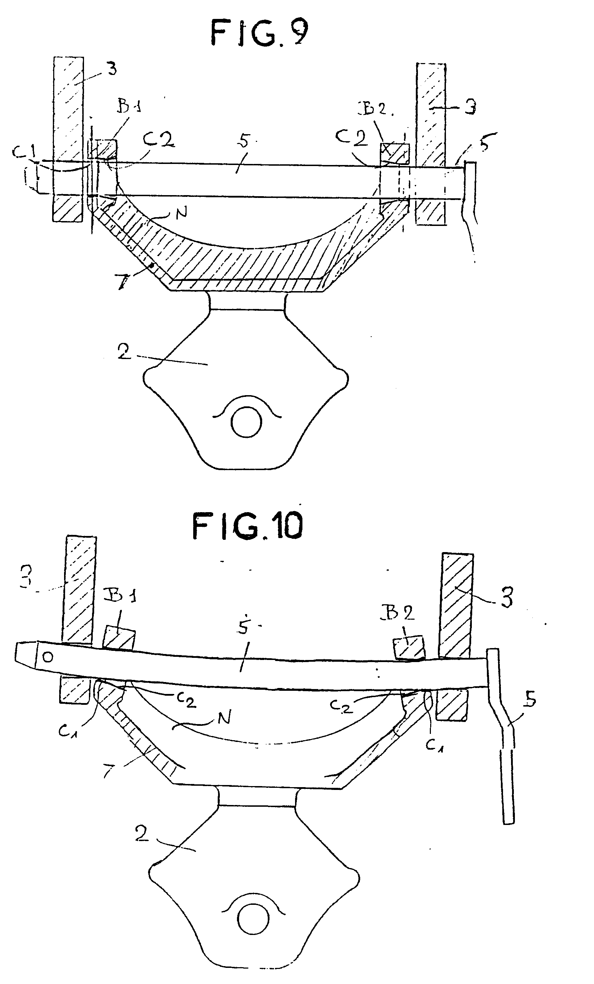

Sur le support de chape 7, selon l'invention, les orifices C de passage des broches 5 ne sont pas cylindriques sur toute leur longueur, car, comme le montre les figures 7 et 8, ces orifices ne sont cylindriques que sur une partie $C_1$ seulement de la longueur de l'orifice et sont évasés selon un tronc de cone $C_2$ du côté de la face interne des branches $B_1$ et $B_2$. Ainsi, lors d'une sollicitation importante exercée sur la chape 2, les efforts transmis aux branches B et aux broches 5 sont réduits, tant en flexion qu'en effort tranchant, car la partie cylindrique $C_1$ est située vers l'extérieur des branches B, alors que la partie évasée $C_2$, située de l'autre côté, offre une plus grande liberté de débattement aux broches 5 malgré la déformation vers l'intérieur des branches $B_1$ et $B_2$, comme le montre les figures 9 et 10 représentant respectivement le support de chape 7, monté, avant et pendant une sollicitation à la traction F. Lorsque cette sollicitation augmente, les branches $B_1$ et $B_2$ se resserrent grâce à leur élasticité, et les parties évasées $C_2$ des orifices de passage de broches finissent par venir en contact, par une génératrice, avec les broches 5 et non en un point, comme le montre la figure 10.

**Revendications**

1. Support de chape moulé (7) permettant de fixer une chape d'attelage (2) sur l'arrière d'un véhicule tracteur, comportant deux branches nervurées (B1 et B2) reliables, par l'intermédiaire d'orifice (C) et de broches de liaison (5), à des ferrures (3) fixées au chassis du véhicule tracteur, caractérisé en ce que les nervures (N1 à N4) renforçant les branches nervurées (B1 et B2) du support de chape moulé (7) sont disposées uniquement vers l'intérieur et en ce que les orifices de passage (C), de passage des broches de liaison (5) dans les branches (B1 et B2) du support de chape moulé (7) sont constitués d'une partie cylindrique (C1) prolongée par une partie tronconique (C2) dirigée vers l'intérieur.

2. Support de chape moulé, selon la revendication 1 caractérisé en ce que les nervures (N1 à N4) renforçant les branches nervurées B1 et B2 du support de chape moulé (7) sont réduites progressivement de section vers les orifices de passage (C) des broches de liaison (5), de façon à maintenir les dites branches nervurées (B1 et B2) en déformation élastique, quels que soient les efforts de traction appliqués à la chape moulée (7).

**Claims**

1. Moulded clevis support (7) allowing to fix a clevis (2) at the rear of a trailer vehicle, having two ribbed sides (B1 and B2) connectable to a support (3) fastened to the frame of the trailer vehicle through hole (C) and pins (5), wherein the ribs (N1 to N4), which strengthen the ribbed sides (B1 and B2) of the moulded clevis support (7), are placed only to the inside and wherein the holes (C) for the pins (5) in the sides (B1 and B2) of the moulded clevis support (7) are formed by a cylindrical part (C1), which is extended by a trunkconical part (C2) led to the inside.

2. Moulded clevis support (7) according to claim 1, wherein the ribs (N1 to N4) strengthening the ribbed sides (B1 and B2) of the moulded clevis support (7) are progressively reduced in section towards the holes (C) for the pins (5), so as to keep the said ribbed sides (B1 and B2) in an elastic deformation, whatever the pull strengths on the moulded clevis (7) may be.

## Patentansprüche

1. Gegossener Zugmaulhalter (7), der die Befestigung eines Zugmauls (2) auf die Rückseite der Zugmaschine ermöglicht, und der zwei Seite mit Rippen (B1 und B2) hat, die durch Loch (C) und Bolzen (5) mit am Zugmaschinerahmen befestigtem Bock (3) verbunden werden können, dadurch gekennzeichnet, dass die die zwei rippene Seite (B1 und B2) dieses gegossene Halters (7) verstärkende Rippe (N1 bis N4) nur innen sind, dass die Löcher (C) für den Durchgang der Bolzen (5) in die Seite (B1 und B2) des gegossene Zugmaulhalters (7) aus einem zylindrischen Teil (C1), der durch einen kegelstumpfförmige Teil (C2) nach innen verlängert ist, bestehen.

2. Gegossener Zugmaulhalter nach Anspruch 1, dadurch gekennzeichnet, dass die die zwei rippene Seite (B1 und B2) des gegossene Halter (7) verstärkende Rippe (N1 bis N4) einen in Richtung auf die Löcher (C) für die Bolzen (5) nach und nach verminderte Querschnitt haben, so dass die besagte rippene Seite (B1 und B2) in elastischer Verspannung versichert werden, welche Zugkräfte auf das gegossene Zugmaul (7) auch immer sein mögen.

FIG.1

FIG.3

FIG.2

FIG.4

# FIG 5

# FIG 7

# FIG.6

# FIG.8

## FIG.9

## FIG.10